# EUROPEAN PATENT SPECIFICATION

(11) **EP 2 861 359 B1**
(45) Date of publication and mention of the grant of the patent: **08.11.2017**
(21) Application number: 13753694.2
(22) Date of filing: 12.04.2013
(51) Int. Cl.: B09B 3/00, B09B 5/00

(54) **PRODUCTS FOR WASTE ELECTRICAL AND ELECTRONIC EQUIPMENT RE-UTILIZATION AND PROCESS THEREOF**
PRODUKTE FÜR ELEKTROSCHROTT-WIEDERVERWERTUNG UND VERFAHREN DAZU
PRODUITS POUR UNE RÉUTILISATION DE DÉCHET D'ÉQUIPEMENTS ÉLECTRIQUE ET ÉLECTRONIQUE ET PROCÉDÉ ASSOCIÉ

(30) Priority: 13.06.2012 IN MM17142012
(43) Date of publication of application: 22.04.2015
(73) Proprietor: Nagpaul, Rahul, New Delhi 11074 (IN)
(72) Inventor: Nagpaul, Rahul, New Delhi 11074 (IN)
(74) Representative: J A Kemp
(86) International application number: PCT/IN2013/000244
(87) International publication number: WO 2013/186787

(56) References cited:
- WO-A1-2008/070916
- CN-U- 202 031 200
- US-A- 4 819 795

## Description

### DESCRIPTION OF RELATED ART:

Discarded electrical and electronic devices become a prime source of Waste Electrical and Electronics Equipment (WEEE). WEEE normally contain chemical substances such as, for example, lead, cadmium, lead oxide, silver oxide, nickel-metal hydride, brominated flame retardants, toxic gases, toxic metals, Polychlorinated Biphenyls (PCB's), acids and plastics. These chemical substances, if not treated properly, are highly dangerous and hazardous to humans, plants and animals that greatly disturb the flora and fauna of the environment.

Various practices for E-waste disposal including but not limited to landfilling, incineration, soaking in open acid baths, magnetic separation and recycling are known. However, these procedures are not without pollutants such as obnoxious gas or greenhouse gas (GHG) emissions, emission of carcinogens or teratogens and leaching of chemicals into the soil and ground water. Also, these procedures are unsafe, time consuming, costly, requiring large amount of energy consumption and specifically need special machinery or skilled workers.

Efforts are being made for recycling E-wastes for utilization in various value added applications. For example, European patent, EP1428586 (A1) to Barker describes a method for the disposal of discarded electrical and electronic equipment. The method comprises steps such as, for example, dismantling the equipment as necessary, segregating the parts into those containing glass and other items, melting the glass parts and mixing all together to encapsulate the waste parts in the molten glass to form pebble shaped ingots. The ingots are then used as ballast or as a building aggregate.

In addition, few efforts are seen in the art for reutilization of WEEE in building construction. For example, M. Dondi et.al (2009, Waste Management 29:1945-1951) describes a process for re-use glass of TV and PC monitors in the manufacturing of clay bricks and roof tiles. The process consists of steps like clay grinding, mixing of clay, glass, and water followed by successive storage for 7 days. The process also discloses the steps of body preparation, shaping, drying, and firing through a simulation, on a laboratory pilot line, of the industrial processing of clay bricks and roof tiles. Reference may be made to F Andreola et. al (2010, Second International Conference on Sustainable Construction Materials and Technologies) where in the Waste Electrical and Electronic Equipment (WEEE) glasses are used in construction sector as secondary raw material.

However, the methods or processes available in the prior art require heat or chemical treatment of wastes to make them suitable and sustainable raw material in building construction. Also, these methods normally include steps of extraction, re-cycling, shredding, segregation or disposing that are inefficient, costly, time consuming and non-environment friendly.,

A simple, more efficient, non-polluting, environment friendly, expeditious process and apparatus for bulk E-waste treatment for sustainable environmental reutilization of E-waste and/or Waste Electrical and Electronic Equipment (WEEE) is needed.

### BRIEF DESCRIPTION OF DRAWINGS:

The above mentioned and other features, aspects and advantages of the present invention will become better understood with regard to following description, appended claims and accompanying drawings, wherein like reference numerals refer to similar parts throughout the several views where:

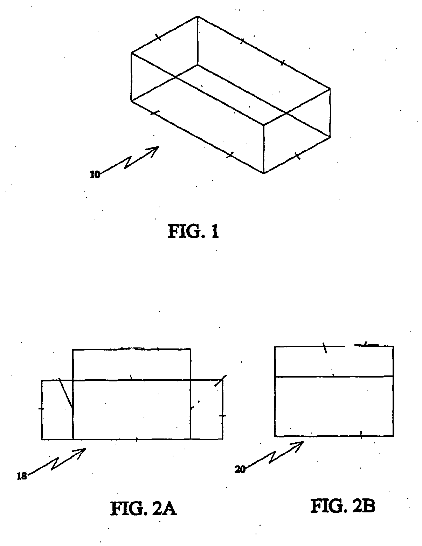

FIG. 1 is a perspective view of a preferred embodiment of a WEEE (E-waste and/or Waste Electrical and Electronic Equipment) brick constructed in accordance with the present invention;
FIG. 2A is a top view of a first piece of the WEEE brick of FIG 1 in a non-welded state;
FIG. 2B is a top view of a second piece of the WEEE brick of FIG. 1 in a non-welded state;

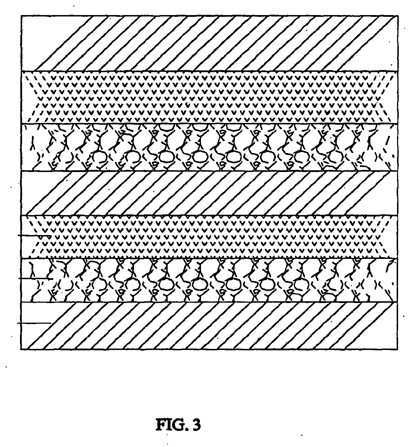

FIG. 3 is a front view of the first piece of FIG. 2A filled with an E-waste and a binder/filler material;

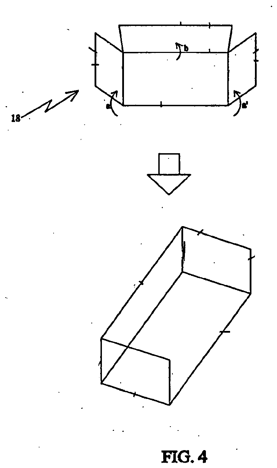

FIG 4 is a perspective view showing a process of transforming the first piece of FIG 2A into a first part;

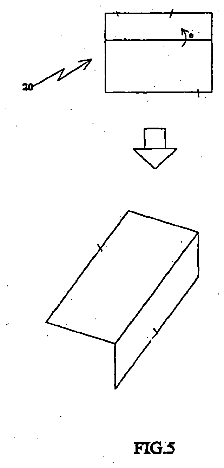

FIG.5 is a perspective view showing a process of transforming the second piece of the FIG. 2B into a second part;

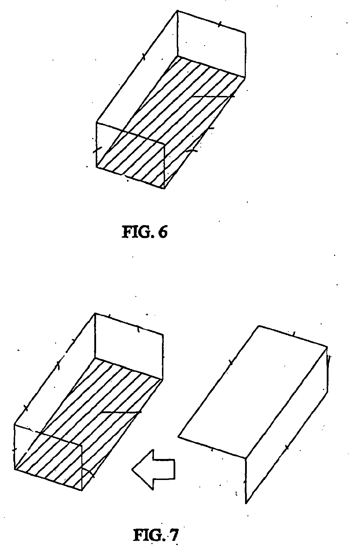

FIG. 6 is a top perspective view of the first piece of FIG. 2A partially filled with the binder/filler material; and
FIG 7 is a top perspective view showing a process of joining the first piece to the second piece to form the WEEE brick of FIG 1.

## Claims

1. A Waste Electrical and Electronic Equipment (WEEE) brick (10) comprising:
a first part (18) defined by a first piece sequentially filled with at least two layers, wherein first layer of said at least two layers that is configured on the first piece comprises binder material, and wherein second layer of said at least two layers that is configured on the first layer comprises WEEE material;
a second part (20) defined by a second piece comprising at least two panels, wherein said second part is coupled with the first part (18) so as to close the first part (18) and te define said WEEE brick.

2. A Waste Electrical and Electronic Equipment (WEEE) brick (10) comprising:
a first part (18) defined by a first piece sequentially filled with at least two layers, wherein first layer of said at least two layers that is configured on the first piece comprises binder material, and wherein second layer of said at least two layers that is configured on the first layer comprises WEEE material;
a second part (20) defined by a second piece comprising a single panel, wherein said second part (20) is coupled to the first part (18) so as to close the first part and define said WEEE brick (10).

3. A process for preparation of Waste Electrical and Electronic Equipment (WEEE) brick (10) adapted to treat a bulk WEEE material for sustainable environmental reutilization, the process comprising steps of:
a) forming a first part (18) and a second part (20) of the WEEE brick from suitable material;
b) categorizing the WEEE material;
c) filling a binder/filler material in a predefined proportion inside the first part (18) of the WEEE brick;
d) filling the categorized WEEE material in a pre-defined sequence and proportion inside the first part (18) of the WEEE brick;
e) allowing the binder material to settle, expand, cure and harden partially for a predefined amount of time;
f) closing the first part (18) with the second part (20) of predefined size to form the WEEE brick (10);
g) preparing outer surfaces of the WEEE brick (10) by corrugating with furrows or punch marks;
h) coating the WEEE brick (10) with a coating material; and
i) laminating with rubber material for aesthetics- and corrosion prevention.

4. The process for preparation of the WEEE brick (10) as claimed in claim 3, wherein the suitable material for forming the first part (18) and the second part (20) is selected from one or more of following mild steel, bronze, aluminium, metal, wood, plastic, alloys, composites, clay, cement, fiberglass, ceramic, and combination thereof.

5. The process for preparation of the brick (10) as claimed in claim 3, wherein the binder material is selected from a group of epoxy resin, mortar mix, silicone sealant, reactive acrylics, polyurethanes adhesives, Reactive Hot Melt Polyurethanes (RHMUs), cynoacrylates, polyvinyl acetates, hydrocarbon rubber based sealants, glue and cement with gravel, sand and coarse aggregates.

6. The process for preparation of the brick (10) as claimed in claim 3, wherein the proportion of the binder material is about 20-30% of the first part (18) of the WEEE brick(10).

7. The process for preparation of the brick (10) as claimed in claim 3, wherein the time required for the binder material to settle, expand, cure and harden partially is about 5-6 hours.

8. The process for preparation of the brick (10) as claimed in claim 3, wherein the proportion of the WEEE material is about 70-80% of the first part of the WEEE brick (10).

9. The process for preparation of the brick (10) as claimed in claim 3, wherein the coating material is selected from one or more of the following enamel paint, anti oxidizing primer paint.

10. The process for preparation of the brick (10) as claimed in claim 3, wherein the brick (10) is adapted to be corrugated with furrows or punch marks for enamel painting followed by rubber lamination.

## Patentansprüche

1. Ziegel (10) aus Elektro- und Elektronik-Altgeräten (Waste Electrical und Electronic Equipment, WEEE), umfassend:
einen ersten Abschnitt (18) definiert durch ein erstes Teil, das sequenziell mit mindestens zwei Schichten gefüllt wird, wobei die erste Schicht der mindestens zwei Schichten, die auf dem ersten Teil konfiguriert ist, Bindematerial umfasst, und wobei die zweite Schicht der mindestens zwei Schichten, die auf der ersten Schicht konfiguriert ist, WEEE-Material umfasst;
einen zweiten Abschnitt (20) definiert durch ein zweites Teil, umfassend mindestens zwei Platten, wobei der zweite Abschnitt mit dem ersten Abschnitt (18) gekoppelt ist, um den ersten Abschnitt (18) zu schließen und den WEEE-Ziegel zu definieren.

2. Ziegel (10) aus Elektro- und Elektronik-Altgeräten (Waste Electrical und Electronic Equipment, WEEE), umfassend:
einen ersten Abschnitt (18) definiert durch ein erstes Teil, das sequenziell mit mindestens zwei Schichten gefüllt wird, wobei die erste Schicht der mindestens zwei Schichten, die auf dem ersten Teil konfiguriert ist, Bindematerial umfasst, und wobei die zweite Schicht der mindestens zwei Schichten, die auf der ersten Schicht konfiguriert ist, WEEE-Material umfasst;
einen zweiten Abschnitt (20) definiert durch ein zweites Teil, umfassend eine einzelne Platte, wobei der zweite Abschnitt (20) an den ersten Abschnitt (18) gekoppelt ist, um den ersten Abschnitt zu schließen und den WEEE-Ziegel (10) zu definieren.

3. Verfahren zur Zubereitung eines Ziegels (10) aus Elektro- und Elektronik-Altgeräten (WEEE), das angepasst ist, um ein loses WEEE-Material für eine nachhaltige ökologische Wiederverwendung zu behandeln, das Verfahren umfassend die folgenden Schritte:
a) Bilden eines ersten Abschnitts (18) und eines zweiten Abschnitts (20) des WEEE-Ziegels aus geeignetem Material;
b) Kategorisieren des WEEE-Materials;
c) Füllen eines Binde-/Füllmaterials in einem vordefinierten Anteil in den ersten Abschnitt (18) des WEEE-Ziegels;
d) Füllen des kategorisierten WEEE-Materials in einer vordefinierten Abfolge und einem vordefinierten Anteil in den ersten Abschnitt (18) des WEEE-Ziegels;
e) Zulassen, dass sich das Bindematerial teilweise über einen vordefinierten Zeitraum setzt, expandiert, aushärtet und bindet;
f) Schließen des ersten Abschnitts (18) mit dem zweiten Abschnitt (20) vordefinierter Größe, um den WEEE-Ziegel (10) zu bilden;
g) Zubereiten von Außenflächen des WEEE-Ziegels (10) durch Rippenbildung mit Rillen oder Stanzmarkierungen;
h) Beschichten des WEEE-Ziegels (10) mit einem Beschichtungsmaterial; und
i) Laminieren mit Gummimaterial zur Ästhetik und als Korrosionsschutz.

4. Verfahren zur Zubereitung des WEEE-Ziegels (10) nach Anspruch 3, wobei das geeignete Material zum Bilden des ersten Abschnitts (18) und des zweiten Abschnitts (20) ausgewählt ist aus einem oder mehreren der folgenden: Flussstahl, Bronze, Aluminium, Metall, Holz, Kunststoff, Legierungen, Verbundmaterialien, Ton, Zement, Fiberglas, Keramik und Kombinationen davon.

5. Verfahren zur Zubereitung des Ziegels (10) nach Anspruch 3, wobei das Bindematerial ausgewählt ist aus einer Gruppe aus Epoxidharz, Mörtelgemisch, Silikondichtmittel, reaktives Acryl, Polyurethan-Klebstoffe, Reaktive Polyurethan-Schmelzklebstoffe (Reactive Hot Melt Polyurethanes, RHMUs), Cyanoacrylate, Polyvinylacetate, Kohlenwasserstoffgummi-basierte Dichtmittel, Kleber und Zement mit Kies, Sand und groben Zuschlagstoffen.

6. Verfahren zur Zubereitung des Ziegels (10) nach Anspruch 3, wobei der Anteil des Bindematerials ca. 20-30 % des ersten Abschnitts (18) des WEEE-Ziegels (10) ist.

7. Verfahren zur Zubereitung des Ziegels (10) nach Anspruch 3, wobei die erforderliche Zeit zum teilweisen Setzen, Expandieren, Aushärten und Binden ca. 5-6 Stunden ist.

8. Verfahren zur Zubereitung des Ziegels (10) nach Anspruch 3, wobei der Anteil des WEEE-Materials ca. 70-80 % des ersten Abschnitts des WEEE-Ziegels (10) ist.

9. Verfahren zur Zubereitung des Ziegels (10) nach Anspruch 3, wobei das Beschichtungsmaterial ausgewählt ist aus einem oder mehreren der folgenden: Emailfarbe, Rostschutzgrundierungsfarbe.

10. Verfahren zur Zubereitung des Ziegels (10) nach Anspruch 3, wobei der Ziegel (10) angepasst ist, um mit Rillen oder Stanzmarkierungen zum Emaillieren gewellt zu werden, gefolgt von einer Gummilaminierung.

## Revendications

1. Brique (10) à base de déchets d'équipements électriques et électroniques (DEEE) comprenant :
une première partie (18) définie par une première pièce remplie successivement d'au moins deux couches, une première couche desdites au moins deux couches qui est réalisée sur la première pièce comprenant une matière liante, et une deuxième couche desdites au moins deux couches qui est réalisée sur la première couche comprenant un matériau issu de DEEE, et
une deuxième partie (20) définie par une deuxième pièce comprenant au moins deux panneaux, ladite deuxième partie étant couplée à la première partie (18) de manière à enfermer la première partie (18) et à définir ladite brique à base de DEEE.

2. Brique (10) à base de déchets d'équipements électriques et électroniques (DEEE) comprenant :
une première partie (18) définie par une première pièce remplie successivement d'au moins deux couches, une première couche desdites au moins deux couches qui est réalisée sur la première pièce comprenant une matière liante, et une deuxième couche desdites au moins deux couches qui est réalisée sur la première couche comprenant un matériau issu de DEEE ;
une deuxième partie (20) définie par une deuxième pièce comprenant un panneau unique, ladite deuxième partie (20) étant couplée à la première partie (18) de manière à enfermer la première partie et à définir ladite brique à base de DEEE (10).

3. Procédé de préparation d'une brique (10) à base de déchets d'équipements électriques et électroniques (DEEE) conçu pour traiter un matériau issu de DEEE en vrac en vue d'une réutilisation environnementale durable, le procédé comprenant les étapes consistant à :
a) former une première partie (18) et une deuxième partie (20) de la brique à base de DEEE à partir d'un matériau approprié,
b) catégoriser le matériau issu de DEEE,
c) verser une matière liante/de remplissage dans une proportion prédéfinie à l'intérieur de la première partie (18) de la brique à base de DEEE,
d) verser le matériau issu de DEEE catégorisé selon un ordre et une proportion prédéfinis à l'intérieur de la première partie (18) de la brique à base de DEEE,
e) laisser la matière liante se stabiliser, se dilater, prendre et durcir partiellement pendant une durée prédéfinie,
f) fermer la première partie (18) à l'aide de la deuxième partie (20) de taille prédéfinie afin de former la brique à base de DEEE (10),
g) préparer les surfaces extérieures de la brique à base de DEEE (10) en créant des ondulations avec des sillons ou des marques de pointeau,
h) enduire la brique à base de DEEE (10) d'une matière d'enduction, et
i) la revêtir de matière caoutchouteuse à des fins esthétiques et de prévention de la corrosion.

4. Procédé de préparation d'une brique à base de DEEE (10) selon la revendication 3, dans lequel le matériau approprié pour former la première partie (18) et la deuxième partie (20) consiste en un ou plusieurs matériaux choisis parmi l'acier doux, le bronze, l'aluminium, le métal, le bois, le plastique, les alliages, les composites, l'argile, le ciment, la fibre de verre, la céramique et des combinaisons de ceux-ci.

5. Procédé de préparation d'une brique (10) selon la revendication 3, dans lequel la matière liante est choisie dans le groupe constitué par la résine époxyde, un mélange de mortier, le mastic au silicone, les acryliques réactifs, les adhésifs à base de polyuréthanes, les adhésifs thermofusibles réactifs à base de polyuréthanes (RHMU ; Reactive Hot Melt Polyurethanes), les cyanoacrylates, les poly(acétates de vinyle), les mastics à base de caoutchouc synthétique, la colle et le ciment contenant du gravier, du sable et des agrégats grossiers.

6. Procédé de préparation d'une brique (10) selon la revendication 3, dans lequel la proportion de matière liante est d'environ 20 à 30 % de la première partie (18) de la brique à base de DEEE (10).

7. Procédé de préparation d'une brique (10) selon la revendication 3, dans lequel la durée requise pour que la matière liante se stabilise, se dilate, prenne et durcisse partiellement est d'environ 5 ou 6 heures.

8. Procédé de préparation d'une brique (10) selon la revendication 3, dans lequel la proportion de matériau issu de DEEE est d'environ 70 à 80 % de la première partie de la brique à base de DEEE (10).

9. Procédé de préparation d'une brique (10) selon la revendication 3, dans lequel la matière d'enduction consiste en de la peinture-émail et/ou de la peinture d'apprêt antioxydante.

10. Procédé de préparation d'une brique (10) selon la revendication 3, dans lequel la brique (10) est adaptée à recevoir la formation d'ondulations avec des sillons ou des marques de pointeau en vue d'une enduction de peinture-émail avant d'être revêtue de caoutchouc.
